(19)

Europäisches
Patentamt
European
Patent Office
Office européen
des brevets

(11)  **EP 4 535 027 A1**

(12)  **EUROPEAN PATENT APPLICATION**
published in accordance with Art. 153(4) EPC

(43) Date of publication:
**09.04.2025  Bulletin 2025/15**

(21) Application number: **23867085.5**

(22) Date of filing: **04.07.2023**

(51) International Patent Classification (IPC):
**G01S 7/41** (2006.01)

(52) Cooperative Patent Classification (CPC):
**G01S 7/41**

(86) International application number:
**PCT/CN2023/105740**

(87) International publication number:
**WO 2024/060790 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.09.2022  CN 202211153939**

(71) Applicant: **Calterah Semiconductor Technology
(Shanghai)
Co., Ltd.
Shanghai 201210 (CN)**

(72) Inventor: **JIANG, Pengfei
Shanghai 201210 (CN)**

(74) Representative: **Savi, Massimiliano et al
Notarbartolo & Gervasi S.p.A.
Viale Achille Papa, 30
20149 Milano (IT)**

(54)  **METHOD AND APPARATUS FOR IMPROVING TARGET DETECTION PRECISION, AND
ELECTRONIC DEVICE**

(57)     A method and apparatus for improving target detection precision, an electronic device, and a non-transient computer-readable storage medium. The method comprises: obtaining a discrete spectrum function of an echo signal according to the discrete spectrum analysis process of the echo signal, wherein an independent variable of the discrete spectrum function is an offset between discrete point data obtained in discrete spectrum analysis on the basis of energy and target real data; constructing an inverse function of the discrete spectrum function by using the discrete spectrum function, wherein an independent variable of the inverse function is a discrete spectrum value of the echo signal; and calculating the offset by using the inverse function.

```
┌─────────────────────────────────────────────────────────┐
│ Obtain a discrete spectrum function of the echo signal    │
│ according to the discrete spectrum analysis process of    │
│ the echo signal, wherein the independent variable of the  │──── S201
│ discrete spectrum function is an offset between the        │
│ discrete point data obtained in the discrete spectrum      │
│ analysis based on power and the target real data           │
└─────────────────────────────────────────────────────────┘
                            │
                            ▼
┌─────────────────────────────────────────────────────────┐
│ Calculate an inverse function of the discrete spectrum    │──── S203
│ function                                                   │
└─────────────────────────────────────────────────────────┘
                            │
                            ▼
┌─────────────────────────────────────────────────────────┐
│ Calculate the offset by using the inverse function        │──── S205
└─────────────────────────────────────────────────────────┘
```

FIG. 2

**Description**

Technical Field

The present application relates to radar detection technology, in particular to a method, an apparatus, an electronic device, a non-transitory computer-readable storage medium for improving target detection accuracy.

Background

Radar transmits electromagnetic wave signals, receives echo signals formed by scattering and/or reflecting by a target, and performs discrete and discrete spectrum analysis on the echo signals to obtain physical quantities such as range, velocity and/or angle of the target relative to the radar.
Since the spectrum obtained by frequency analysis is discrete, a physical quantity estimation corresponding to spectrum points is also discrete, which leads to the measurement accuracy and estimation accuracy of physical quantities being limited by a sampling interval of the discrete spectrum, so that a target detection accuracy is unable to be further effectively improved.

Summary

The present application provides a method, an apparatus, an electronic device, and a non-transitory computer-readable storage medium for improving target detection accuracy, to solve at least one of the above problems.
According to one aspect of the present application, a method for improving target detection accuracy is proposed, the method is used in a frequency modulated continuous wave radar, and the method includes obtaining a discrete spectral function of the echo signal according to a discrete spectrum analysis process of the echo signal, wherein an independent variable of the discrete spectral function is an offset between discrete point data obtained in the discrete spectrum analysis based on energy and real data of the target; constructing an inverse function of the discrete spectral function using the discrete spectral function, wherein an independent variable of the inverse function is a discrete spectral value of the echo signal; calculating the offset using the inverse function.
According to some embodiments, the discrete spectrum analysis process includes: windowing discrete sampling points of the echo signal; performing Fast Fourier transform on the windowed discrete sampling points; wherein the fast Fourier transform includes at least one of a range Fourier transform, a velocity Fourier transform, and an angle Fourier transform.
According to some embodiments, a Gaussian function distribution is satisfied at a peak of the discrete spectral function.
According to some embodiments, using the discrete spectral function, constructing an inverse function of the discrete spectral function includes fitting the inverse function of the discrete spectral function with a polynomial function.
According to some embodiments, calculating the offset using the inverse function includes constructing a homogeneous polynomial with a plurality of discrete sampling points of the echo signal; calculating coefficients of the homogeneous polynomial using the inverse function; calculating the offset using the constructed homogeneous polynomial and the calculated coefficients of the homogeneous polynomial.
According to some embodiments, calculating coefficients of the homogeneous polynomial using the inverse function includes constructing an equation set according to the inverse function using a plurality of discrete sampling points of the echo signal; calculating coefficients of the homogeneous polynomial according to the equation set.
According to some embodiments, calculating the offset using the inverse function includes: calculating coefficients of the homogeneous polynomial with the inverse function; calculating the offset based on coefficients of the homogeneous polynomial. The offset is calculated based on coefficients of the homogeneous polynomial.
According to some embodiments, the method further includes calculating an estimation value of the target using the offset and a plurality of discrete values of the echo signal.
According to some embodiments, the estimation value is an estimation value of a velocity, a range, and/or a direction of arrival of the target.
According to one aspect of the present application, a method for improving target detection accuracy is provided, the method is used in a frequency modulated continuous wave radar, and including: processing signal on an echo signal to obtain target parameter energy data, wherein the target parameter energy data includes a plurality of discrete points; screening at least one first target point among the plurality of discrete points based on energy; for any one of the first target points, selecting a preset number of adjacent points adjacent to the first target point from the target parameter energy data; constructing a fitting function based on energy values of the at least one first target point and the adjacent points of the at least first target point; obtaining an offset estimation of the first target point based on the fitting function; and obtaining a corresponding target parameter estimation in the target parameter energy data based on the offset estimation and the first target point.

According to some embodiments, the signal processing includes discrete spectrum analysis, processing signal on an echo signal to obtain target parameter energy data includes: performing discrete spectrum analysis on the echo signal; preprocessing the discrete spectrum analysis result to obtain the target parameter energy data.

According to some embodiments, the discrete spectrum analysis is fast Fourier transform, and preprocessing the discrete spectrum analysis result includes preprocessing the discrete spectrum analysis result by using a logarithmic function, for example, in the signal processing process of FMCW millimeter wave radar, because the calculation result characteristics of the logarithmic function coincide with the fast Fourier transform characteristics in the radar signal processing, the logarithmic function is used to preprocess the discrete spectrum analysis result, so that a subsequent target information processing is not limited by a discrete spectrum interval and the like, and the accuracy of the target information detection is more effectively improved.

According to some embodiments, constructing the fitting function based on the energy values of the at least one first target point and the adjacent points of the at least first target point includes: preprocessing the at least one first target point and the energy of the at least one first target point, respectively; and constructing the fitting function based on the preprocessed energies of the at least one first target point and adjacent points of the at least one first target point, wherein the fitting function is used to characterize the signal processing process.

According to some embodiments, the preprocessing is squaring, square rooting, or logarithmic processing of the at least one first target point and the energy of the at least one first target point.

According to some embodiments, obtaining the offset estimation of the first target point based on the fitting function includes: obtaining the offset estimation of the first target point based on a preset N-order polynomial and the fitting function, wherein N is an integer greater than or equal to 1.

According to some embodiments, obtaining the offset estimation of the first target point based on the N-order polynomial and the fitting function includes: getting an inverse function to acquire two sets of coefficients after performing Taylor series expansion on the fitting function; acquiring two homogeneous polynomials of degree N based on the two sets of coefficients and the N-order polynomial; and obtaining a ratio between the two homogeneous polynomials of degree N to get the offset estimation of the first target point.

According to some embodiments, the target parameter estimation includes at least one of a target range, a target velocity, and a target angle.

According to some embodiments, the preprocessing is implemented in hardware.

According to some embodiments, obtaining the offset estimation of the first target point based on the N-order polynomial and the fitting function is implemented by a hardware implementation.

According to one aspect of the present application, an apparatus for improving target detection accuracy is proposed, the apparatus is used in a frequency modulated continuous wave radar, and the apparatus includes: a discrete spectral function calculation unit used for obtaining a discrete spectral function of an echo signal according to a discrete spectrum analysis process of the echo signal, wherein an independent variable of the discrete spectral function is an offset between discrete point data obtained in the discrete spectrum analysis based on energy and real data of the target; an inverse function calculation unit used for constructing an inverse function of the discrete spectral function using the discrete spectral function, wherein an independent variable of the inverse function is a discrete spectral value of the echo signal; and an offset calculation unit used for calculating the offset using the inverse function.

According to an aspect of the present application, an integrated circuit is proposed, and the integrated circuit includes a data correction module used for implementing a method as described in any one of the previous embodiments.

According to some embodiments, the integrated circuit is a millimeter wave radar chip.

According to an aspect of the present application, a radio device is proposed, and the radio device includes: an antenna; and an integrated circuit as described in any one of the previous embodiments; wherein the integrated circuit is electrically connected with the antenna for transmitting and receiving radio signals.

According to an aspect of the present application, an electronic device is proposed, the electronic device includes: a processing unit; and a storage unit storing computer program, when the computer program is executed by the processing unit, the processing unit is caused to perform the method as described in any one of the previous embodiments.

According to an aspect of the present application, a non-transitory computer-readable storage medium is proposed, the non-transitory computer-readable storage medium has computer-readable instructions stored thereon, when the instructions are executed by a processor, the processor is caused to perform a method as described in any one of the previous embodiments.

According to an embodiment of the present application, the entire calculation process is not limited by the discrete spectrum sampling points, and ultra-accuracy measurement can be realized.

It should be understood that the above general description and the following detailed description are merely exemplary and do not limit the present application.

Other features and advantages of the present invention will be set forth in the specification below, and in part will become apparent from the specification, or may be learnt by implementing the embodiments of the present invention.

Purposes and other advantages of the present invention can be achieved and obtained by structures specifically pointed out in the specification, claims and drawings.

Brief Description of Drawings

Drawings are used to provide a further understanding of technical schemes of the present application, and the drawings form a part of the specification, and are used to explain the technical schemes of the present application together with the embodiments of the present application and do not form limitations on the technical schemes of the present application.

In order to more clearly explain the technical schemes in the embodiments of the present application, the drawings that need to be used in the description of the embodiments will be briefly introduced below. The above and other objects, features, and advantages of the present application will become more apparent from the detailed description of exemplary embodiments thereof with reference to the drawings.

FIG. 1 is a schematic diagram of an application environment according to an exemplary embodiment of the present application.

FIG. 2 is a flowchart of a method of improving target detection accuracy according to an exemplary embodiment of the present application.

FIG. 3 is a flowchart of another method of improving target detection accuracy according to an exemplary embodiment of the present application.

FIG. 4 is a block diagram of an apparatus for improving target detection accuracy according to an exemplary embodiment of the present application.

FIG. 5 is an electronic device according to an exemplary embodiment of the present application.

FIG. 6 is a schematic diagram of an error comparison according to an exemplary embodiment of the present application.

Detailed Description

Exemplary embodiments will now be described more fully with reference to the drawings. However, the exemplary embodiments may be implemented in a variety of forms and should not be understood as limited to the embodiments set forth herein; instead, these embodiments are provided so that the present application will be comprehensive and complete, and the concept of the exemplary embodiments will be fully conveyed to those skilled in the art. In the drawings, the same reference numerals denote the same or similar parts, and thus repeated description thereof will be omitted.

The described features, structures, or characteristics may be incorporated in any suitable manner in one or more embodiments. In the following description, numerous specific details are provided to give a thorough understanding of embodiments of the present disclosure. However, those skilled in the art will appreciate that the technical schemes of the present disclosure may be practiced without one or more of these specific details, or appreciate that other methods, components, materials, apparatuses, operations, etc. may be employed. In these instances, well-known structures, methods, apparatuses, implementations, materials, or operations will not be illustrated or described in detail.

The flowcharts shown in the drawings are merely illustrative and do not necessarily include all contents and operations/steps, nor do they necessarily need to be performed in the order described. For example, some operations/-steps may also be decomposed, while some operations/steps may be combined or partially combined, so the order of actual execution may be changed according to the actual situation.

The terms "first," "second," and the like in the specification and claims of the present application and the above drawings are used to distinguish different objects, and are not used to describe a specific order. Furthermore, the terms "including" and "having", as well as any variations thereof, are intended to cover non-exclusive inclusions. For example, a process, method, system, product, or device including a series of steps or units is not limited to the listed steps or units, but optionally further includes steps or units not listed, or optionally further includes other steps or units inherent to the process, method, product, or device.

After processing such as filtering, mixing, analog-to-digital converting and sampling on the echo signal, a discrete signal with frequency as the target physical quantity may be obtained. Through the discrete spectrum analysis of the discrete signal, the discrete spectrum of the signal may be obtained. The discrete spectrum analysis processing process may be expressed as a function taking an offset between the discrete point data obtained in the discrete spectrum analysis based on energy and the target real data as an independent variable, as shown in formula (1):

$$S[K] \propto W[\hat{x}[K] - x] = W_k[\Delta x] \qquad (1)$$

In formula (1), $\Delta x = X[K] - x$, $\hat{x}[K]$ represents discrete point data obtained in discrete spectrum analysis based on energy, x represents the target real data, S[K] is a discrete spectral function taking an offset between the discrete point data obtained in the discrete spectrum analysis based on energy and the real data of the target as an independent variable, W $[\hat{x}[K] - x]$ is a discrete spectral function taking a deviation value as an independent variable.

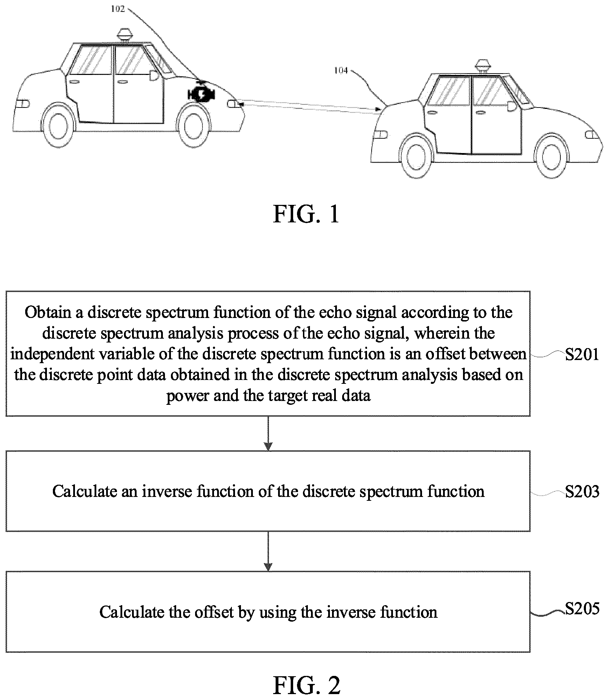

According to an embodiment of the present application, it may be applied to an application environment as shown in FIG. 1. Wherein, a radar 102 transmits a detection signal, the detection signal is refracted and/or reflected by a target 104 to form an echo signal, the echo signal is received by the radar 102, and the radar 102 discretizes the echo signal of the target 104 to obtain a discrete point spectrum (e.g. spectrum, angle spectrum, etc.), and analyzes the discrete point spectrum to determine range, moving velocity, direction of arrival, etc. of the target 104 relative to the radar 102, thereby realizing the detection and positioning of the target.

As described above, in many application scenarios such as radar velocity measurement, ranging measurement, and Direction Of Arrival (DOA) measurement, analog-to-digital conversion (ADC) may usually be performed on the echo signal received by the receiving antenna in the radar system, then processing such as sampling and fast Fourier transform (FFT) are continued, and then target estimation spectrum discrete points reflecting the range, velocity, and Direction Of Arrival of the target 104 relative to the radar 102 can be obtained. When the real spectral values reflecting the physical quantity of the target 104 in the echo signal does not coincide with the discrete points of the target estimation spectrum, there will be a certain error between the obtained estimated physical quantity of the target and the actual physical quantity of the target, and in the actual application scenario, the probability of coinciding between the real spectrum values and the target estimation spectrum discrete points is extremely low because the discrete values are used to estimate a continuous value, that is, the physical quantity information of the target measured by the radar 102 will have a high probability of error, and the magnitude of the error will be limited by the above processing such as ADC processing and a subsequent sampling frequency.

Since the spectrum obtained by frequency analysis is discrete, the physical quantity estimation corresponding to the spectrum points is also discrete. Therefore, the measurement accuracy of physical quantities will be limited by the sampling interval of discrete spectrum. However, the increase in the number of sampling points will inevitably increase the resource consumption of the system, and the requirements for the hardware resources and computing resources of the radar 102 will also be higher.

The inventors of the present application have found that in the discrete spectrum S[K] of the radar echo signal, for any target, other discrete points in addition to a discrete point with maximum energy also contain information of the target physical quantities. Therefore, in the embodiments of the present application, the offset of the target relative to the discrete estimation may be further estimated according to energy relationship of respective discrete frequency points.

Since the discrete spectrum may be expressed as a function taking the offset between the discrete point data obtained in the discrete spectrum analysis based on energy and the target real data as an independent variable, as shown in formula (1), according to the embodiment of the present application, the deviation value between data of the discrete sampling points and the target real data is calculated by calculating an inverse function of the discrete spectrum analysis function, and the estimated value of the detection target is determined by using the calculated deviation value. Since the discrete spectral function as shown in formula (1) is continuous, the whole calculation process is not limited by the discrete spectrum sampling points, and ultra-high accuracy measurement can be realized.

In order to make the above objects, features, and advantages of the present application more obvious and easy to understand, various non-limiting embodiments of the embodiments of the present application will be illustrated below with reference to the drawings. Based on the embodiments in the present application, other embodiments obtained by those ordinary skilled in the art without making inventive work are all within the scope of protection of the present application.

Hereinafter, specific embodiments according to the present application will be described in detail with reference to the drawings.

FIG. 2 is a flowchart showing a method of improving target detection accuracy according to an exemplary embodiment of the present application, and a method of improving the target detection accuracy according to the present application will be described in detail with reference to FIG. 2 as an example below.

According to an exemplary embodiment of the present application, the method shown in FIG. 2 may be used in a frequency modulated continuous wave radar.

As shown in FIG. 2, in step S201, according to the discrete spectrum analysis process of the echo signal, a discrete spectral function of the echo signal is obtained, wherein the independent variable of the discrete spectral function is an offset between the discrete point data obtained in the discrete spectrum analysis based on energy and the target real data.

It should be noted that, since the discrete spectral function of the echo signal obtained in step S201 is related to the discrete spectrum analysis procedure of the echo signal, the discrete spectrum analysis process is different, and the discrete spectral function obtained is also different. Therefore, the present application does not limit the discrete spectral function.

According to some embodiments of the present application, the discrete spectrum analysis process may include:

firstly, windowing discrete sampling points of the echo signal;

then, performing fast Fourier transform on the windowed discrete sampling points. Herein, the fast Fourier transform may include at least one of a range Fourier transform, a velocity Fourier transform, and an angle Fourier transform.

According to some embodiments, after windowing and fast Fourier transform, the peak of the discrete spectral function of the echo signal may be approximated by a Gaussian function.

According to some embodiments, the independent variable of the Gaussian function is an offset of a frequency corresponding to a target physical quantity relative to a frequency corresponding to a sampling point coordinate of the discrete spectral function.

In step S203, an inverse function of the discrete spectral function is constructed by using the discrete spectral function, wherein an independent variable of the inverse function is a discrete spectral value of the echo signal.

Since the independent variable of the discrete spectral function obtained in step S201 is the offset between the discrete point data obtained in the discrete spectrum analysis based on energy and the target real data, therefore, by calculating the inverse function of the discrete spectral function, the offset between the discrete point data obtained in discrete spectrum analysis based on energy and the target real data can be obtained.

According to some embodiments, the inverse function of the discrete spectral function may be fitted with a polynomial function.

According to an embodiment of the present application, when the inverse function of the discrete spectral function is fitted by a polynomial, on the basis that the fitted polynomial function is approximated to the inverse function of the discrete spectral function, a polynomial having a small Taylor series expansion of the polynomial function is selected.

According to some embodiments, the inverse function of the fitted discrete spectral function is represented by formula (2):

$$P(W_k(\Delta x)) = \sum_{i=0}^{N} a_{ik}(\Delta x_k)^i \qquad (2)$$

In step S205, the offset is calculated using the inverse function.

According to some embodiments, the offset may be calculated by the following:

firstly, constructing a homogeneous polynomial using multiple discrete sampling points of the echo signal;
then, using the inverse function to calculate coefficients of the homogeneous polynomial;
finally, the offset is calculated using the constructed homogeneous polynomial and the coefficients of the calculated homogeneous polynomial.

According to an embodiment of the present application, the constructed homogeneous polynomial is represented by formula (3) and formula (4):

$$A = \sum_i a_i[n_0, n_1, \ldots] \cdot P[1]^{n_1} \cdot P[2]^{n_2} \cdot \ldots \qquad (3)$$

$$B = \sum_i b_i[n_0, n_1, \ldots] \cdot P[1]^{n_1} \cdot P[2]^{n_2} \cdot \ldots \qquad (4)$$

wherein, $n_0 + n_1 + n_2 + \cdots = N$.

According to some embodiments, the offset is calculated by formula (5):

$$\triangle x = A/B \qquad (5)$$

According to an example of the present application, the coefficients of the homogeneous polynomial are calculated using the inverse function by the following steps:

firstly, constructing an equation set according to the inverse function by using multiple discrete sampling points of the echo signal;

then, the coefficients of the homogeneous polynomial are calculated from the equation set.

For example, an equation set is constructed by using a discrete sampling point with maximum energy of the echo signal and adjacent sampling points of the discrete sampling point with maximum energy, as shown in formula (6).

$$\begin{cases} P(W_{k-1}(\Delta x)) = \sum_{i=0}^{N} a_i (\Delta x_{k-1})^i \\ P(W_k(\Delta x)) = \sum_{i=0}^{N} a_i (\Delta x_k)^i \\ P(W_{k+1}(\Delta x)) = \sum_{i=0}^{N} a_i (\Delta x_{k+1})^i \end{cases} \qquad (6)$$

According to some embodiments, after step S205, the steps may further include:
calculating an estimation value of the frequency of the detection target using the calculated offset and a plurality of discrete values of the echo signal, as shown in formula (7):

$$x = x[k] + \Delta x_k \qquad (7)$$

According to some embodiments, the estimation value calculated by formula (7) is an estimation value of moving velocity of the frequency of the detection target, a range of the detection target, or a direction of arrival of the echo signal.

According to the embodiment shown in FIG. 2, the entire calculation process is not limited by the discrete spectrum sampling points, and ultra-accuracy measurement can be realized, and the estimation error is 1/20 of the error of the existing discrete estimation methods.

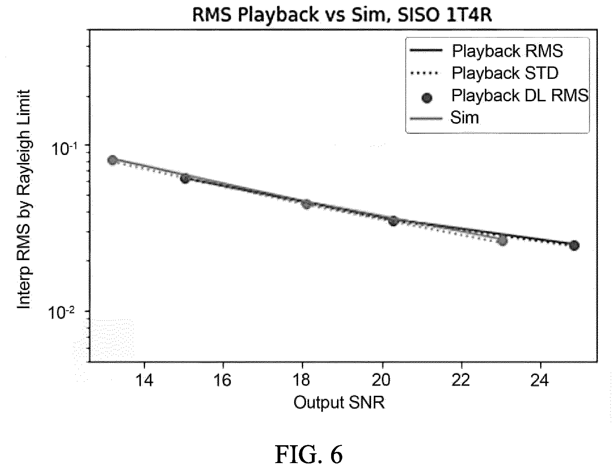

As shown in a schematic diagram of error comparison in FIG. 6, the abscissa is signal-to-noise ratio of the signal, and the ordinate is the error of the estimation method relative to the discrete spectrum sampling interval. As shown in FIG. 6, when the signal-to-noise ratio SNR is greater than 18dB, the estimation accuracy according to the embodiments of the present application (i.e. RMS Playback) is equal to $5 * 10^{-2}$ (i.e. 1/20) of the error of the existing discrete estimation methods (such as Sim, STD, DL RMS).

FIG. 2 is a description of a method for improving target detection accuracy according to an exemplary embodiment of the present application. Hereinafter, a discrete spectrum method is taken as an example, in the discrete spectrum method, windowing processing is performed on discrete sampling points of the echo signal, and then fast Fourier transform is performed on windowed discrete sampling points. And a method of improving target detection accuracy according to an exemplary embodiment of the present application is specifically described.

According to an embodiment of the present application, after the discrete spectrum method in which windowing processing is performed on discrete sampling points of the echo signal and then fast Fourier transform is performed on the windowed discrete sampling points, the discrete spectral function of the echo signal is expressed as the function as shown in formula (1), in the function, the offset between the discrete point data obtained in the discrete spectrum analysis based on energy and the target real data is taken as the independent variable .

Subject to the estimation accuracy and the calculation cost, under the condition that the Taylor series expansion energy of the inverse function in the formula (1) is guaranteed to be as small as possible, according to an embodiment of the present application, the inverse function of the formula (1) is shown as formula (8).

$$P(W_k(\Delta x)) = \log(W_k(\Delta x)) \cong A(\Delta x)^2 + B \qquad (8)$$

In one embodiment, an equation set may be constructed using formula (8) and the discrete sampling points of the echo signal, as shown in formula (9):

$$\begin{cases} P(W_{k-1}(\Delta x)) = \log(W_{k-1}(\Delta x)) \cong A(\Delta x_{k-1})^2 + B \\ P(W_k(\Delta x)) = \log(W_k(\Delta x)) \cong A(\Delta x_k)^2 + B \\ P(W_{k+1}(\Delta x)) = \log(W_{k+1}(\Delta x)) \cong A(\Delta x_{k+1})^2 + B \end{cases} \qquad (9)$$

Optionally, using coordinates of the discrete spectrum sampling points, it is possible to obtain:

$$\Delta x_{k+1} = \Delta x_k + (x_{k+1} - x_k) \qquad (10)$$

$$\Delta x_{k-1} = \Delta x_k - (x_k - x_{k-1}) \qquad (11)$$

According to formula (5), a deviation value calculated using formulas (9)-(11) is shown in formula (12):

$$\Delta x = \frac{\log W_{k-1} - \log W_{k+1}}{2\log W_{k-1} + \log W_{k+1} - 2\log W_k} \qquad (12)$$

wherein,

$$A = \log W_{k-1} - \log W_{k+1}, \quad B = 2\log W_{k-1} + \log W_{k+1} - 2\log W_k.$$

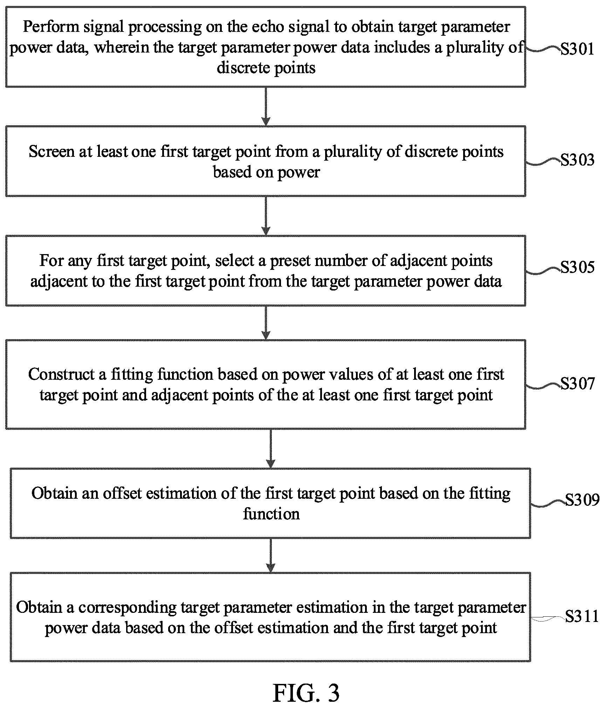

FIG. 3 is a flowchart showing another method of improving target detection accuracy according to an exemplary embodiment of the present application, and a method of improving target detection accuracy according to an exemplary embodiment of the present application will be described in detail with reference to FIG. 3 as an example below.

As shown in FIG. 3, in step S301, signal processing is performed on the echo signal to obtain target parameter energy data, wherein the target parameter energy data includes a plurality of discrete points.

According to some embodiments, the signal processing includes discrete spectrum analysis. In step S301, performing signal processing on the echo signal to obtain the target parameter energy data, includes: performing discrete spectrum analysis on the echo signal; then preprocessing the discrete spectrum analysis results to obtain the target parameter energy data.

It should be noted here that operations such as analog-to-digital conversion and sampling need to be performed before discrete spectrum analysis is performed on the echo signal, which is not limited here.

According to some embodiments, the discrete spectrum analysis is a fast Fourier transform, and in step S301, the discrete spectrum analysis result is preprocessed using a logarithmic function to obtain the target parameter energy data.

For example, in the signal processing process of Frequency Modulated Continuous Wave (FMCW) millimeter wave radar, because the calculation result characteristics of the logarithmic function are consistent with the fast Fourier transform characteristics in radar signal processing, the logarithmic function may be used to preprocess results of discrete spectrum analysis, so that a subsequent target information processing will not be limited by discrete spectrum intervals and the like, so as to more effectively improve the accuracy of target information detection.

In step S303, at least one first target point is screened from a plurality of discrete points based on energy.

According to some embodiments, the echo signal received by the radar may include one or more targets such that the waveform of the echo signal includes one or more energy peaks. Thus, in step S303, one or more first target points are filtered out among the plurality of discrete points.

In step S305, for any first target point, a preset number of adjacent points adjacent to the first target point are selected from the target parameter energy data.

As described above, in addition to the discrete point with maximum energy, other discrete points also contain information of the target physical quantity. According to energy relationship of respective discrete frequency points, the offset of the target relative to the discrete estimation may be further estimated. Therefore, in step S305, for each first target point obtained, a preset number of adjacent points adjacent to each first target point are obtained. For example, a discrete point adjacent to the left side and a discrete point adjacent to the right side of each first target point are respectively obtained.

In step S307, a fitting function is constructed based on energy values of at least one first target point and adjacent points of the at least one first target point. Herein, the fitting function is used to characterize the signal processing procedure of step S301.

According to some embodiments, in step S307, first, the energy values of each target point and the adjacent points of each target point are preprocessed, and the fitting function is constructed based on the preprocessed energy values of each target point and the adjacent points of each target point. Herein the preprocessing includes squaring, root squaring, or logarithmic processing of the at least one first target point and the energy of the at least one first target point.

In step S309, an offset estimation of the first target point is obtained based on the fitting function.

According to some embodiments, the offset estimation of the first target point is obtained based on a preset N-order polynomial and a fitting function, wherein N is an integer greater than or equal to 1.

Taking the discrete spectrum analysis as a fast Fourier transform and the preprocessing function as a log function as an example, the execution process of step S309 is described in detail below.

Step S3091, after performing Taylor series expansion on the fitting function, getting an inverse function to acquire two sets of coefficients, as shown in formula (8).

In step S3093, two homogeneous polynomials of degree N are acquired based on the two sets of coefficients and a preset N-order polynomial, as shown in formula (12). Herein the preset N-order polynomial specifies the series of polynomials.

In step S3095, a ratio between the two homogeneous polynomials of degree N is obtained to obtain an offset estimation of the first target point, as shown in formula (12).

In step S311, a corresponding target parameter estimation in the target parameter energy data is obtained based on the offset estimation and the first target point.

According to some embodiments, the target parameter estimation includes at least one of a target range, a target velocity, and a target angle.

According to some embodiments, the above preprocessing, solving the inverse function in step S3091, the polynomial obtained in step S3093, and the calculation of the ratio of the polynomial in step S3095 are all implemented by hardware, and at least part of the hardware structure may be shared when calculating the target parameter estimation of at least one target point.

The embodiments of the present application have been introduced above mainly from the perspective of methods. Those skilled in the art will readily appreciate that the operations or steps of the various examples described in connection with the embodiments disclosed herein can be implemented in the form of hardware or a combination of hardware and computer software. Those skilled in the art may use different ways to implement the described functions for each particular operation or method, and such implementation should not be considered beyond the scope of the present application.

Hereinafter, an embodiment of the apparatus of the present application will be described. For details not described in the embodiments of the apparatus of the present application, reference may be made to the embodiments of the method of the present application.

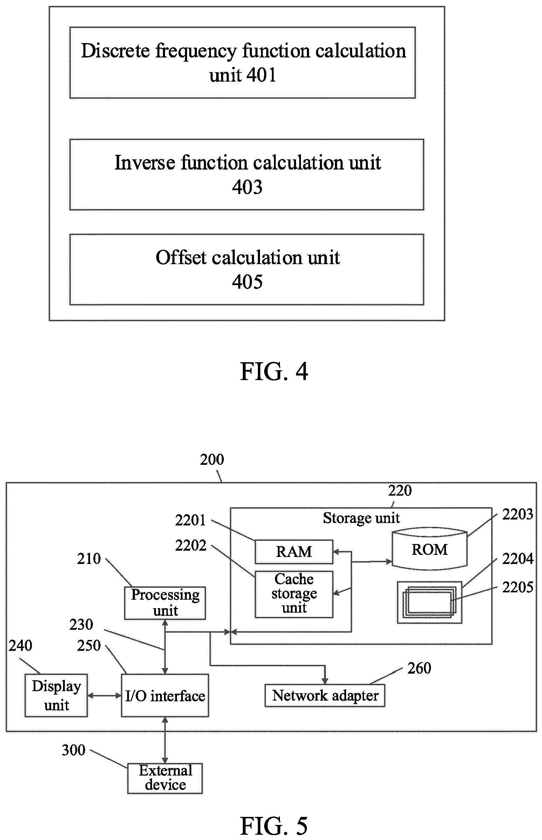

FIG. 4 is a block diagram of an apparatus for improving target detection accuracy according to an exemplary embodiment of the present application, and the apparatus for improving target detection accuracy according to an exemplary embodiment of the present application will be described in detail with reference to FIG. 4 as an example below.

The apparatus shown in FIG. 4 includes a discrete spectral function calculation unit 401, an inverse function calculation unit 403, and an offset calculation unit 405, wherein the discrete spectral function calculation unit 401 is used for obtaining a discrete spectral function of an echo signal according to a discrete spectrum analysis process of the echo signal, wherein an independent variable of the discrete spectral function is an offset between the discrete point data obtained in the discrete spectrum analysis based on energy and the target real data; the inverse function calculation unit 403 is used for constructing an inverse function of the discrete spectral function by using the discrete spectral function, wherein an independent variable of the inverse function is a discrete spectral value of the echo signal; the offset calculation unit 405 is used for calculating the offset using the inverse function.

According to an embodiment of the present application, the apparatus shown in FIG. 4 is used in a frequency modulated continuous wave radar.

According to an embodiment of the present application, an integrated circuit is also proposed. The integrated circuit includes a signal source target number determination module for implementing the embodiments as previously described. According to some embodiments, the integrated circuit is a millimeter wave radar chip. Optionally, the integrated circuit may be of an Antenna-In-Package (AiP) chip structure, an Antenna-On-Package (AoP) chip structure, or an Antenna-On-Chip (AoC) chip structure.

In an alternative embodiment, the integrated circuit may be identical to the radar chip set forth in any embodiment of the present application, i.e., they may have the same structure and function as each other, or may be combined with each other for forming a cascade structure, which will not be repeated here for simplicity of illustration, but it should be understood that the techniques which should be familiar by those skilled in the art based on the contents documented in the present application are included within the scope documented in the present application.

According to other embodiments of the present application, a radio device is further proposed. The radio device includes an antenna, and an integrated circuit as previously described. Herein the integrated circuit is electrically connected with the antenna for transmitting and receiving radio signals. For example, the radio device may include: a carrier, an integrated circuit and an antenna and the like as described in any of the above embodiments, the integrated circuit may be provided on the carrier; the antenna may be provided on the carrier, or the antenna is integrated with the integrated circuit as an integral device provided on the carrier (i.e., at this situation, the antenna may be an antenna provided in an AiP, AoP or AoC structure); herein, the integrated circuit is connected with the antenna (i.e., at this situation, the sensor chip or the integrated circuit such as the conventional SoC is not integrated with the antenna), and is used for receiving and transmitting radio signals. Herein, the carrier may be a printed circuit board (PCB), and a first transmission line may be a PCB wire.

FIG. 5 is an electronic device according to an exemplary embodiment of the present application. Hereinafter, an electronic device 200 according to this embodiment of the present application will be described with reference to FIG. 5. The electronic device 200 shown in FIG. 5 is merely an example, and should not impose any limitation on the functions and scope of use of the embodiments of the present application.

As shown in FIG. 5, the electronic device 200 is embodied in a form of a general-purpose computing device. The components of the electronic device 200 may include, but are not limited to: at least one processing unit 210, at least one storage unit 220, a bus 230 connecting different system components (including the storage unit 220 and the processing unit 210), a display unit 240, etc.

Herein, the storage unit stores program codes, and the program codes can be executed by the processing unit 210 so that the processing unit 210 executes the methods according to various exemplary embodiments of the present application described in the present specification. For example, the processing unit 210 may perform a method as shown in FIG. 1.

The storage unit 220 may include readable media in forms of a volatile storage unit, such as a random access storage unit (RAM) 2201 and/or a cache storage unit 2202, and may further include a read-only storage unit (ROM) 2203.

The storage unit 220 may also include a program/utility 2204 having a group (at least one) of program modules 2205, such program modules 2205 include, but are not limited to: an operating system, one or more application programs, other program modules, and program data, each or some combination of these examples may include implementation of a network environment.

The bus 230 may be represented as one or more of several types of bus structures, including a memory unit bus or a memory unit controller, a peripheral bus, a graphics acceleration port, a processing unit, or a local bus using any bus structure of a variety of bus structures.

The electronic device 200 may also communicate with one or more external devices 300 (e.g., keyboards, pointing devices, Bluetooth devices, etc.), and may also communicate with one or more devices that enable a user to interact with the electronic device 200, and/or communicate with any device (e.g., a router, modem, etc.) that enables the electronic device 200 to communicate with one or more other computing devices. Such communication may occur through an input/output (I/O) interface 250. Furthermore, the electronic device 200 may also communicate with one or more networks, e.g. a local area network (LAN), a wide area network (WAN), and/or a public network such as Internet, through the network adapter 260. The network adapter 260 may communicate with other modules of the electronic device 200 over the bus 230. It should be understood that, although not shown in the figures, other hardware and/or software modules may be used in connection with the electronic device 200, the other hardware and/or software modules include, but are not limited to: microcode, device drivers, redundant processing units, external disk drive arrays, RAID systems, tape drives, and data backup storage systems, and the like.

For example, the electronic device in the embodiment of the present application may further include: a device body; and a radio equipment as set forth in any of the above embodiments disposed on the device body; herein, the radio equipment may be used to implement functions such as target detection and/or wireless communication.

Specifically, on the basis of the embodiments described above, in an optional embodiment of the present application, the radio equipment may be provided outside the device body or inside the device body, while in other optional embodiments of the present application, the radio equipment can be partially provided inside the device body and partially provided outside the device body. The embodiments of the present disclosure are not limited thereto, it all depends specifically.

In an optional embodiment, the above device body may be components and products applied to fields such as smart cities, smart houses, transportation, smart homes, consumer electronics, security monitoring, industrial automation, in-cabin detection (such as smart cockpits), medical devices and health care. For example, the device body can be smart transportation device (such as automobiles, bicycles, motorcycles, ships, subways, trains, etc.), security device (such as cameras), liquid level/flow rate detection device, smart wearable device (such as bracelets, glasses, etc.), smart home device (such as sweeping robots, door locks, televisions, air conditioners, smart lights, etc.), various communication devices (such as mobile phones, tablet computers, etc.), as well as road gates, smart traffic lights, smart signs, traffic cameras and various industrial mechanical arms (or robots), etc. The device body can be various instruments for detecting vital signs parameters and various devices equipped with the instruments, such as vital signs characteristics detection in automobile cabins, indoor personnel monitoring, intelligent medical devices, consumer electronic devices, etc.

From the above description of the embodiments, it will be readily understood by those skilled in the art that the exemplary embodiments described herein may be implemented by software, or may be implemented by software in combination with necessary hardware. The technical scheme according to the embodiment of the present application may be embodied in the form of a software product, and the software product may be stored in a non-volatile storage medium (which may be a CD-ROM, a U disk, a mobile hard disk, etc.) or on a network, and may include several instructions to cause a computing device (which may be a personal computer, a server, or a network device, etc.) to perform the above method according to the embodiments of the present application.

The software product may employ any combination of one or more readable media. The readable medium may be a readable signal medium or a readable storage medium. The readable storage medium may be, for example, but is not limited to: electrical, magnetic, optical, electromagnetic, infrared, or semiconductor system, apparatus, or device, or a combination of any of the above. More specific examples (a non-exhaustive list) of readable storage media include: an electrical connection having one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

The computer-readable storage medium may include a data signal propagated in a baseband or propagated as part of a carrier, and readable program code are carried in the computer-readable storage medium. Such propagated data signals may take a variety of forms, including, but not limited to: electromagnetic signals, optical signals, or any suitable combination of the above. The readable storage medium may also be any readable medium other than a readable storage medium, the readable medium may send, propagate, or transmit a program for use by or in connection with an instruction execution system, apparatus, or device. The program code contained on the readable storage medium may be transmitted using any suitable medium, including, but not limited to, wireless, wired, fiber optic cable, RF, etc., or any suitable combination of the above.

The program code for performing the operations of the present application may be written in any combination of one or more programming languages, the programming languages include object-oriented programming languages, such as Java, C++, and the like, as well as conventional procedural programming languages, such as the "C" language or similar programming languages. The program code may be executed entirely on the user computing device, executed partially on the user device, executed as a stand-alone software package, executed partially on the user computing device and partially on a remote computing device, or executed entirely on a remote computing device or server. In a situation that a remote computing device is involved, the remote computing device may be connected to the user computing device over any kind of network, including a local area network (LAN) or a wide area network (WAN), or may be connected to an external computing device (e.g., using an Internet service provider to connect over the Internet).

The computer-readable medium carries one or more programs, and when the one or more programs are executed by one of the devices, the one or more programs cause the computer-readable medium to implement the above functions.

Those skilled in the art can understand that the above modules may be distributed in an apparatus according to the description of the embodiment, or may be changed accordingly and in one or more apparatuses different from the present embodiment. The modules of the above embodiments may be merged into one module, or may be further split into a plurality of sub-modules.

According to an embodiment of the present application, a computer program including a computer program or instructions that, when the computer program or instructions are executed by a processor, the above-described method may be executed. In an optional embodiment, the above integrated circuit may be a millimeter wave radar chip. The types of digital function modules in the integrated circuit can be determined according to the actual requirements. For example, in the millimeter wave radar chip, the data processing module can be used for operations such as range-dimensional Doppler transform, velocity-dimensional Doppler transform, constant false alarm detection, direction of wave arrival detection, point cloud processing, etc., for obtaining information such as range, angle, velocity, shape, size, surface roughness and dielectric characteristics of the target.

It should be noted that, the radio device may achieve functions such as target detection and/or communication by transmitting and receiving radio signals to provide detection target information and/or communication information to the device body, thereby assisting or even controlling the operation of the device body.

For example, when the above-mentioned device body is applied to advanced driving assistance system (ADAS), the radio device (such as millimeter wave radar) as on-board sensor can assist ADAS system to achieve application scenarios such as adaptive cruise, autonomous emergency braking (AEB), blind spot detection (BSD), lane change assist (LCA), rear cross traffic alert (RCTA), parking assistance, rear vehicle warning, collision avoidance, pedestrian detection, etc.

The embodiments of the present application have been described in detail above, and the principles and embodiments of the present application have been described herein by applying specific examples, and the description of the above embodiments is only for helping to understand the methods and core ideas of the present application. In this situation, changes or modifications made by those skilled in the art according to the ideas of the present application and base on the specific embodiments and application scope of the present application fall within the scope of protection of the present application. In general, the contents of the present specification should not be understood as limiting the present application.

**Claims**

1. A method for improving target detection accuracy, wherein the method is used in a frequency modulated continuous wave (FMCW) radar, and the method comprises:

according to a discrete spectrum analysis process of an echo signal, obtaining a discrete spectral function of the echo signal, wherein an independent variable of the discrete spectral function is an offset between discrete point data obtained in a discrete spectrum analysis based on energy and target real data;

constructing an inverse function of the discrete spectral function using the discrete spectral function, wherein an independent variable of the inverse function is a discrete spectral value of the echo signal; and

calculating the offset using the inverse function.

2. The method according to claim 1, wherein the discrete spectrum analysis process comprises:

windowing discrete sampling points of the echo signal;

performing fast Fourier transform (FFT) on the windowed discrete sampling points;

wherein the FFT comprises at least one of a range-FFT, a velocity-FFT, and an angle-FFT.

3. The method according to claim 2, wherein a peak of the discrete spectral function satisfies a Gaussian function distribution.

4. The method according to claim 1, wherein constructing the inverse function of the discrete spectral function using the discrete spectral function comprises:

fitting the inverse function of the discrete spectral function with a polynomial function.

5. The method according to claim 4, wherein calculating the offset with the inverse function comprises:

constructing a homogeneous polynomial using a plurality of discrete sampling points of the echo signal;

calculating coefficients of the homogeneous polynomial via the inverse function; and

calculating the offset with the constructed homogeneous polynomial and the calculated coefficients of the homogeneous polynomial.

6. The method according to claim 5, wherein calculating the coefficients of the homogeneous polynomial using the inverse function comprises:

constructing an equation set according to the inverse function using a plurality of discrete sampling points of the echo signal; and

calculating the coefficients of the homogeneous polynomial according to the equation set.

7. The method according to claim 4, wherein calculating the offset with the inverse function comprises:

calculating coefficients of the homogeneous polynomial via the inverse function; and

calculating the offset based on the coefficients of the homogeneous polynomial.

8. The method according to any one of claims 1 to 7, wherein the method further comprises:

calculating an estimation value of a target using the offset and a plurality of discrete values of the echo signal.

9. The method according to any one of claims 1-7, wherein the estimation value comprises an estimation value of a velocity, a range, and/or a direction of arrival of the target.

10. A method for improving target detection accuracy, wherein the method is used in a frequency modulated continuous wave (FMCW) radar, and comprises:

performing signal processing on an echo signal to obtain target parameter energy data, wherein the target parameter energy data comprises a plurality of discrete points;

screening at least one first target point among the plurality of discrete points based on energy;

for any one of the first target points, selecting a preset number of adjacent points adjacent to the first target point from the target parameter energy data;

constructing a fitting function based on energy values of the at least one first target point and the adjacent points of the at least first target point;

obtaining an offset estimation of the first target point based on the fitting function; and

obtaining a corresponding target parameter estimation in the target parameter energy data based on the offset estimation and the first target point.

11. The method according to claim 10, wherein the signal processing comprises a discrete spectrum analysis, performing the signal processing on the echo signal to obtain the target parameter energy data comprises:

performing a discrete spectrum analysis on the echo signal; and
preprocessing a discrete spectrum analysis result to obtain the target parameter energy data.

12. The method according to claim 11, wherein the discrete spectrum analysis is a fast Fourier transform, and preprocessing the discrete spectrum analysis result comprises:
preprocessing the discrete spectrum analysis result using a logarithmic function.

13. The method according to claim 10, wherein constructing the fitting function based on the energy values of the at least one first target point and the adjacent points of the at least first target point comprises:

preprocessing the at least one first target point and energy of the at least one first target point, respectively; and
constructing the fitting function based on preprocessed energy of the at least one first target point and the adjacent points of the at least one first target point, wherein the fitting function is used to characterize a signal processing process.

14. The method according to claim 13, wherein the preprocessing is squaring, square rooting, or logarithmic processing of the at least one first target point and the energy of the at least one first target point.

15. The method according to any one of claims 10-14, wherein obtaining the offset estimation of the first target point based on the fitting function comprises:
obtaining the offset estimation of the first target point based on a preset N-order polynomial and the fitting function, wherein N is an integer greater than or equal to 1.

16. The method according to claim 15, wherein obtaining the offset estimation of the first target point based on the preset N-order polynomial and the fitting function comprises:

after performing Taylor series expansion on the fitting function, getting an inverse function to obtain two sets of coefficients;
obtaining two homogeneous polynomials of degree N based on the two sets of coefficients and the N-order polynomial; and
obtaining a ratio between the two homogeneous polynomials of degree N to acquire the offset estimation of the first target point.

17. The method according to claim 10, wherein the target parameter estimation comprises at least one of a target range, a target velocity, and a target angle.

18. The method according to claims 11-16, wherein the preprocessing is implemented in hardware.

19. The method according to claim 15, **characterized in**: obtaining the offset estimation of the first target point based on the N-order polynomial and the fitting function is implemented in hardware.

20. An apparatus for improving target detection accuracy, wherein the apparatus is used in a frequency modulated continuous wave radar, and the apparatus comprises:

a discrete spectral function calculation unit used for obtaining a discrete spectral function of an echo signal according to a discrete spectrum analysis process of the echo signal, wherein an independent variable of the discrete spectral function is an offset between discrete point data obtained in the discrete spectrum analysis based on energy and target real data;
an inverse function calculation unit used for constructing an inverse function of the discrete spectral function by using the discrete spectral function, wherein an independent variable of the inverse function is a discrete spectral value of the echo signal; and
an offset calculation unit used for calculating the offset using the inverse function.

21. An integrated circuit comprising a data correction module for implementing the method according to any one of claims 1-19.

22. The integrated circuit according to claim 21, wherein the integrated circuit is a millimeter wave radar chip.

23. A radio equipment comprising: an antenna; and

   the integrated circuit according to claim 21 or 22;
   wherein the integrated circuit is electrically connected with the antenna for transmitting and receiving radio signals.

24. An electronic device comprising: a processing unit; and
   a storage unit storing a computer program, when the computer program is executed by the processing unit, the computer program causing the processing unit to perform the method according to any one of claims 1-19.

25. A non-transitory computer-readable storage medium having stored thereon computer-readable instructions, when the instructions are executed by a processor, instructions causing the processor to perform the method according to any one of claims 1-19.

FIG. 1

FIG. 2

Perform signal processing on the echo signal to obtain target parameter power data, wherein the target parameter power data includes a plurality of discrete points ⟩~S301

Screen at least one first target point from a plurality of discrete points based on power ⟩~S303

For any first target point, select a preset number of adjacent points adjacent to the first target point from the target parameter power data ⟩~S305

Construct a fitting function based on power values of at least one first target point and adjacent points of the at least one first target point ⟩~S307

Obtain an offset estimation of the first target point based on the fitting function ⟩~S309

Obtain a corresponding target parameter estimation in the target parameter power data based on the offset estimation and the first target point ⟩~S311

FIG. 3

Discrete frequency function calculation unit 401

Inverse function calculation unit 403

Offset calculation unit 405

FIG. 4

200

220

Storage unit

2201

2202

2203 ROM

2204

2205

RAM

Cache storage unit

210

Processing unit

230

240

250

Display unit

I/O interface

Network adapter  260

300

External device

FIG. 5

FIG. 6

# INTERNATIONAL SEARCH REPORT

| International application No. |
|---|
| **PCT/CN2023/105740** |

| | |
|---|---|
| **A.** | **CLASSIFICATION OF SUBJECT MATTER** |
| | G01S7/41(2006.01)i |

According to International Patent Classification (IPC) or to both national classification and IPC

| | |
|---|---|
| **B.** | **FIELDS SEARCHED** |

Minimum documentation searched (classification system followed by classification symbols)

   IPC:G01S

Documentation searched other than minimum documentation to the extent that such documents are included in the fields searched

Electronic data base consulted during the international search (name of data base and, where practicable, search terms used)

   CNABS; CNTXT; VEN; WOTXT; EPTXT; USTXT; CNKI; IEEE: 雷达, 采样, 精度, 离散, 频谱, 反函数, 偏差值, radar, sampl +, disperse, spectrum, inverse function, deviation

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | CN 113009432 A (CALTERAH SEMICONDUCTOR TECHNOLOGY (SHANGHAI) CO., LTD.) 22 June 2021 (2021-06-22)<br>    description, paragraphs [0054]-[0200], and figures 1-7 | 1-25 |
| A | CN 114966656 A (TSINGHUA UNIVERSITY) 30 August 2022 (2022-08-30)<br>    entire document | 1-25 |
| A | CN 112526474 A (HARBIN ENGINEERING UNIVERSITY) 19 March 2021 (2021-03-19)<br>    entire document | 1-25 |
| A | US 2015276929 A1 (WISTRON NEWEB CORP.) 01 October 2015 (2015-10-01)<br>    entire document | 1-25 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 October 2023** | **18 October 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/105740**

| Patent document cited in search report | | | Publication date (day/month/year) | Patent family member(s) | | | Publication date (day/month/year) |
|---|---|---|---|---|---|---|---|
| CN | 113009432 | A | 22 June 2021 | None | | | |
| CN | 114966656 | A | 30 August 2022 | None | | | |
| CN | 112526474 | A | 19 March 2021 | None | | | |
| US | 2015276929 | A1 | 01 October 2015 | US | 9778355 | B2 | 03 October 2017 |

Form PCT/ISA/210 (patent family annex) (July 2022)